# EUROPÄISCHE PATENTSCHRIFT

(11) **EP 0 752 079 B1**
(45) Veröffentlichungstag und Bekanntmachung des Hinweises auf die Patenterteilung: **14.10.1998**
(21) Anmeldenummer: 95919322.8
(22) Anmeldetag: 24.05.1995
(51) Int. Cl.: F16K 17/04

(54) **DRUCKARMATUR, INSBESONDERE ALS DRUCKENTLASTUNGSVENTIL UND DRUCKABSICHERUNGSVENTIL**
PRESSURE FITTING, USEFUL IN PARTICULAR AS PRESSURE RELIEF AND SAFETY VALVE
APPAREIL DE ROBINETTERIE SOUS PRESSION, UTILE NOTAMMENT COMME SOUPAPE DE DETENTE ET DE SECURITE

(30) Priorität: 27.05.1994 DE 4418660
(43) Veröffentlichungstag der Anmeldung: 08.01.1997
(73) Patentinhaber: SIEMENS AKTIENGESELLSCHAFT, 80333 München (DE)
(72) Erfinder: CONRADS, Hermann-Josef, D-91074 Herzogenaurach (DE); LAURER, Erwin, D-91096 Möhrendorf (DE); MODEL, Jürgen, D-91056 Erlangen (DE); PREISS, Ullrich, D-91056 Erlangen (DE)
(86) Internationale Anmeldenummer: DE9500678
(87) Internationale Veröffentlichungsnummer: WO9533152

(56) Entgegenhaltungen:
- DE-C- 597 161
- GB-A- 1 080 063

## Beschreibung

Die Erfindung betrifft eine Druckarmatur mit einem Strömungskanal, einem Ventilkegel, einem Verschiebungselement und einer Greifvorrichtung, wobei
a) das Verschiebungselement entlang einer Hauptachse der Druckarmatur verschieblich angeordnet ist,
b) an einem Ende des Verschiebungselements der Ventilkegel angeordnet ist,
c) der Strömungskanal durch den Ventilkegel verschließbar ist,
d) die Greifvorrichtung in eine Fangstellung bewegbar ist, so daß sie bei einer den Strömungskanal öffnenden Position des Ventilkegels den Ventilkegel und/oder das Verschiebungselement greift und den Ventilkegel in der den Strömungskanal öffnenden Position hält.

In sämtlichen Gebieten der Technik, in denen Behältnisse oder Leitungen unter Druck stehen, finden Druckarmaturen, insbesondere zur Druckentlastung und zur Drucksteuerung, Anwendung. Eine Druckentlastung oder eine Drucksteuerung kann dabei sowohl während eines normalen Betriebes als auch zur Sicherheit einer Anlage mit unter Druck stehenden Komponenten erfolgen. Insbesondere Druckbehälter sind nach bestehenden technischen Regeln häufig gegen Überdruck abzusichern. Darüber hinaus ist bei einem Druckbehälter, insbesondere einem Dampfkessel, die Möglichkeit einer, auch von Hand einzuleitende, Druckentlastung gefordert. Durch eine rechzeitige und ausreichende Druckentlastung kann eine Durchführung flexibler Sicherheitsmaßnahmen verbessert werden. Dies ist insbesondere bei einem Kernkraftwerk mit einem unter Druck stehenden Primärsystem, welches zu schützende Komponenten, wie den Reaktorkern aufweist, von Vorteil. Eine Druckentlastung eines Druckbehälters, der unter einen hohen Innendruck steht, beispielsweise einem Kernreaktor-Druckbehälter mit einem Innendruck von etwa 150 bar, auf einen Druck der Größenordnung eines Umgebungsdruckes von beispielsweise 2 bis 4 bar oder auf einen drucklosen Zustand muß je nach Auslegungsbedingung vorgesehen sein.

Ein Sicherheitsventil zur Absicherung eines unter erhöhtem Druck stehenden hydraulischen Systems ist in der GB-PS 199,541 sowie der GB-PS 808,577 beschrieben. Das Sicherheitsventil ist so ausgelegt, daß bei Überschreiten eines kritischen Drucks ein Druckabbau durchgeführt werden kann. Beiden Patentschriften ist gemeinsam, daß eine konstruktive Ausgestaltung des Sicherheitsventils beschrieben wird, bei der durch Verschiebung eines Arretierungselements entlang einer Achse senkrecht zur Hubrichtung des Ventilkolbens des Sicherheitsventils eine Arretierung des Ventilkegels in einer das Sicherheitsventil öffnenden Stellung erreicht wird. Nach einer bestimmungsgemäßen Öffnung des Sicherheitsventils, d.h. nach einem Überschreiten eines kritischen Druckes innerhalb des hydraulischen Systems, kann das Sicherheitsventil bis zu einem niedrigeren Systemdruck geöffnet gehalten werden.

Das in der GB-PS 808,577 beschriebene Arretierungselement ist eine Kugel, welche über einen durch eine Feder vorgespannten Kolben in eine Nut des Ventilkolbens gedrückt wird. Der die Kugel verschiebende Kolben kann durch eine manuell zu bedienende Vorrichtung sowie ggf. durch eine elektromagnetische Vorrichtung in seiner Ausgangslage zurückgebracht werden. Das Arretierungselement ist auf alle Fälle immer so ausgeführt, daß bei jedem Öffnen des Sicherheitsventils letzteres automatisch offen gehalten wird. Eine Fernbedienung der Arretierungsanordnung beschränkt sich lediglich auf ein Zurückfahren des Arretierungselementes, d.h. eine erneute Spannung der Feder.

Das in der GB-PS 199,541 beschriebene Arretierungselement weist zwei an entgegengesetzten Seiten eines Ventilkolbens angeordnete Stifte auf, die in eine jeweilige in den Ventilkolben verlaufende Nut eingreifen. Die Stifte sind über eine vorgespannte Feder gegen den Ventilkolben gedrückt, so daß mit dem Ventilkolben ein Kraftschluß besteht, der eine Bewegung des Kolbens in seine Hubrichtung behindert. Ist der Druck in dem hydraulischen System so groß, daß sowohl die Reibkraft der Stifte als auch die Kraft der Schließfeder überwunden werden, wird der Kolben in Hubrichtung bewegt. Sobald die jeweilige Nuten in dem Ventilkolben die Höhe der Stifte erreicht haben, werden diese automatisch, von außen nicht steuerbar, in die Nuten gedrückt. Hierdurch wird eine Arretierung des Ventilkolbens in einer das Ventil öffnenden Position erreicht. Die Vorspannung der Federn der Stifte kann so reguliert werden, daß bei unterschiedlichen Systemdrücken ein erneutes Schließen des Ventils in Folge der Schließkraft der Ventilfeder erreicht wird.

Die GB-PS 808,577 sowie die GB-PS 199,541 beschränken sich ausschließlich auf das Offenhalten eines Sicherheitsventils mit Arretierungselementen, die entlang einer Achse senkrecht zur Hubrichtung des Ventilkolbens bewegt werden und die durch eine vorgespannte Feder ohne die Möglichkeit einer Beeinflussung (Steuerung) von außen bei jedem Öffnen des Ventils in eine Position gebracht werden, so daß der Ventilkolben in einer das Ventil öffnenden Stellung verbleibt.

Aus der GB-PS 808,577 ist eine Armatur bekannt, die eine Arretiervorrichtung umfaßt. Diese Vorrichtung kann nur manuell wieder gelöst werden.

Auch aus der DE 597 161 ist eine Armatur bekannt, die mit Hilfe einer Klinke arretiert werden kann. Diese wird durch eine Feder in die Schließlage gedrückt.

In den bekannten Armaturen werden die beweglichen Teile stark beschleunigt und abgebremst. Das ist darauf zurückzuführen, daß sie erst bei einem relativ großen Mediumdruck bewegt und dann plötzlich arretiert werden.

Der Erfindung lag die Aufgabe zugrunde, eine Druckarmatur anzugeben, welche selbst bei einem geringen Druck und in einem drucklosen Zustand bewegbar und in einer geöffneten Position haltbar ist.

Die Aufgabe wird gemäß einer ersten Ausführungsform der Erfindung dadurch gelöst, daß das Verschiebungselement einen Kolben hat, der in einer Führung führbar ist und Mittel zur ein Eingreifen der Greifvorrichtung aufweist, daß die Greifvorrichtung zumindest eine um einen Drehpunkt schwenkbare Fangklinke hat, und daß zwischen dem Kolben und der Führung ein Dämpfungsraum angeordnet ist.

Nach einem Öffnen des Strömungskanals ist durch das Greifen und das Halten des Ventilkegels gewährleistet, daß der Strömungskanal bei einer Druckentlastung geöffnet bleibt, selbst dann, wenn die Druckentlastung in einen drucklosen Zustand führt. Der Ventilkegel wird durch die Greifvorrichtung in einer den Strömungskanal öffnenden Position sicher gehalten. Dies ist insbesondere für einen Kernreaktor-Druckbehälter vorteilhaft, da somit eine Druckentlastung auf einen sehr niedrigen Druck durchführbar ist, wodurch Sicherheitsmaßnahmen zum Schutze des Reaktorkerns, insbesondere eine Kühlung des Reaktorkerns, vereinfacht durchführbar sind. Selbst in einem äußerst unwahrscheinlichen Falle eines Durchschmelzens des Kernreaktors ist ein effektiver Druckabbau auf einen niedrigen Druck gewährleistet, so daß sämtliche Sicherheitsmaßnahmen problemlos und wirksam ergreifbar sind. Eine Druckentlastung kann mit der Druckarmatur zudem gezielt, gegebenenfalls manuell, eingeleitet und durchgeführt werden.

Durch den Dämpfungsraum wird bei einem Schließen der Druckarmatur einem harten Aufsetzen des Ventilkegels und des Kolbens entgegengewirkt. Weiterhin wirkt der Dämpfungsraum, insbesondere durch eine nur allmählich stattfindende Druckerhöhung, bei einem Öffnen der Druckarmatur verlangsamend auf die Bewegung des Kolbens. Auch dadurch wird eine mechanische Belastung der Druckarmatur infolge eines Aufeinanderprallens von Komponenten vermindert.

Nach einer zweiten Ausführungsform der Erfindung wird die Aufgabe dadurch gelöst, daß eine Steuervorrichtung vorgesehen ist, mit welcher die Greifvorrichtung in die Fangstellung hinein und aus dieser heraus in eine Freistellung, in der der Ventilkegel wieder frei verschieblich ist, steuerbar ist.

Unabhängig von einem im Inneren der Druckarmatur herrschenden Druck kann damit erreicht werden, daß zu jedem Zeitpunkt eine Druckentlastung mittels der Druckarmatur durchführbar ist. Es ist außerdem unabhängig von einem Innendruck der Druckarmatur ein Schließen der Armatur gesichert. Außerdem ist gewährleistet, daß die Armatur für eine Druckentlastung bis zu einem drucklosen Zustand offencehalten werden kann.

Der in einer Führung führbare Kolben kann außerhalb des Strömungskanals angeordnet sein, wodurch eine bauliche Beeinflussung des Strömungskanals vermieden und eine effektive Wirkungsweise der Druckarmatur sichergestellt ist. Die Fangklinke kann in der Druckarmatur einfach montiert werden und ist beispielsweise durch eine Rotation um einen Drehpunktz einfach in die Fangstellung hinein und aus dieser heraus bewegbar. Sie kann als einfaches mechanisches Element ausgeführt sein, welches auch bei einem hohen Druck und einer hohen Temperatur sicher funktionsfähig ist. Sie kann je nach geforderten Betriebsbedingungen aus einem entsprechenden Material, beispielsweise einem rostfreien Stahl, gefertigt sein. Für eine Bewegung in die Fangstellung hinein kann eine Druckfeder vorgesehen sein. Auch kann es für eine sichere Arretierung des Ventilkegels vorteilhaft sein, mehrere Fangklinken vorzusehen.

Der Kolben hat vorzugsweise eine Nut zum Eingreifen der Fangklinke. Ein mechanisches Eingreifen der Fangklinke in die Nut ist auch unter einem hohen Druck und bei einer hohen Temperatur sicher durchführbar, so daß ein Öffnen und ein Offenhalten der Druckarmatur in jedem Fall gewährleistet ist.

Vorzugsweise ist das Steuerventil über einen Motor betreibbar. Der Motor kann dabei ferngesteuert zu einer Kontrollierten Druckentlastung angesteuert werden.

Bevorzugtermaßen treibt der Motor einen Stößel an, welcher, insbesondere über eine Schalthülse, die Greifvorrichtung in die Fangposition hinein oder aus dieser heraus bewegt. Bei einer über den Motor bedingten Freigabe des Stößels wird die Greifvorrichtung in die Fangposition bewegt. Eine entgegengesetzte Bewegung des Stößels führt die Greifvorrichtung aus der Fangposition wieder heraus.

Mit Vorteil ist das Steuerventil über zwei voneinander unabhängige Motoren betreibbar. Dies ermöglicht es, jeden der Motoren während des Betriebs unabhängig von dem anderen zu überprüfen und ggf. auszutauschen. Denn für ein Öffnen, ein Geöffnethalten oder ein Schließen der Druckarmatur ist die Funktionsfähigkeit nur eines einzelnen Motors erforderlich. Dies erhöht nicht nur die Sicherheit einer Anlage mit unter Druck stehenden Komponenten, sondern eine redundante Ausführung erleichtert die Wartung und verringert die Störanfälligkeit der Druckarmatur.

Vorzugsweise ist ein Öffnen und ein Schließen des Strömungskanals, insbesondere für eine Druckentlastung, über das Steuerventil durchführbar. Ein solches Öffnen und Schließen des Strömungskanals, d.h. eine entsprechende Bewegung des Ventilkegels, wird dabei vorzugsweise über zumindest ein Entlastungskanal gesteuert, welcher mit der Druckarmatur verbunden und von einem Steuerventilkegel des Steuerventils verschließbar ist. Ein Öffnen des Entlastungskanals führt zu einer den Strömungskanal öffnenden Bewegung des Ventilkegels, und ein Schließen des Entlastungskanals zu einer schließenden Bewegung.

Bevorzugtermaßen arbeitet die Druckarmatur nach dem Entlastungsprinzip, wobei bei geschlossenem Strömungskanal stromaufwärts des Ventilkegels ein Druck aufbringbar ist, der im Inneren der Druckarmatur reduzierbar ist, wodurch eine den Strömungskanal öffnende Bewegung des Ventilkegels erzeugt wird. In der Schließposition der Druckarmatur kann beispielsweise der Druck eines zu entlastenden und unter Druck stehenden Systems im Inneren der Druckarmatur anliegen. Insbesondere wird über den Kolben eine Kraft auf den Ventilkegel ausgeübt, so daß letzterer den Strömungskanal verschließt. Die Kraft kann dabei über den Druck sowie über eine zusätzliche Federkraft erzeugt werden. Bei einer Reduzierung des Druckes im Inneren der Druckarmatur nimmt die Kraft auf den Ventilkegel bzw. den Kolben ab, und eine durch den Druck hervorgerufene, an der Unterseite des Kolbens angreifende Hebekraft zu, was zu einer den Strömungskanal öffnenden Bewegung des Ventilkegels bzw. des Kolbens führt. Bei einem Schließen des Entlastungskanals erfolgt ein erneuter Druckaufbau im Inneren der Druckarmatur, so daß die auf den Ventilkegel bzw. den Kolben wirkende Kraft zunimmt und ein erneuter Verschluß des Strömungskanals erfolgt.

Vorzugsweise hat die Druckarmatur ein eigenmediumbetreibbares Steuerventil, welches bei Überschreiten eines kritischen Druckes im Inneren der Druckarmatur ein Öffnen des Strömungskanals und bei Unterschreiten des kritischen Druckes ein Wiederschließen des Strömungskanals bewirkt. Das Steuerventil kann dabei ein Federventil sein, welches über einen weiteren Entlastungskanal mit dem Inneren der Druzkarmatur verbunden ist. Steigt der Druck im Inneren der Druckarmatur, so steigt ebenfalls der an dem eigenmediumbetreibbaren Steuerventil anliegende Druck. Erreicht dieser Druck einen kritischen Wert, der zu einer Kraft führt, welche die Federkraft übersteigt, so erfolgt ein Öffnen des Steuerventils. Es erfolgt somit eine Druckentlastung des Inneren der Druckarmatur, wodurch ein Öffnen des Strömungskanals erreicht und somit eine Druckentlastung des unter Druck stehenden Systems bewirkt wird. Bei Absinken des Druckes im Inneren der Druckarmatur sinkt die auf das Steuerventil ausgeübte Kraft, so daß dieses ab einem gewissen Wert des Druckes wieder schließt, wodurch ebenfalls ein erneutes Schließen der Druckarmatur erfolgt. Eine weitere Druckentlastung des unter Druck stehenden Systems ist damit unterbunden. Die Druckarmatur eignet sich somit ebenfalls als Sicherheitsventil für ein unter Druck stehendes Systems, insbesondere einen Druckbehälter eines Druckwasserreaktors.

Bevorzugtermaßen hat der Ventilkegel in der stromabwärtigen Richtung annähernd eine Zwiebelform. Dies ermöglicht zusammen mit einer entsprechenden Form des Strömungskanals eine besonders günstige Strömungsführung und damit auch eine besonders kompakte Ausführung der Druckarmatur. Der Ventilkegel ist vorzugsweise nach Art von Zwiebelschalen elastisch aufgebaut, wodurch eine besonders gute Sitzdichtigkeit, selbst bei einer thermisch oder mechanisch verformten Geometrie des Ventilsitzes, auf welchem der Ventilkegel im Strömungskegel aufliegt, sichergestellt ist. Die damit erreichte besonders kompakte Ausführung ist nicht nur kostengünstig, sondern wirkt sich auch positiv auf die Dynamik der Druckarmatur, insbesondere wegen kleinerer beweglicher Massen und dadurch kleinerer auftretender Kräfte, aus. Darüber hinaus treten geringere Stoßbelastungen, insbesondere des Ventilkegels, auf und eine einfachere Halterung der Druckarmatur ist möglich.

Bevorzugtermaßen ist in der Führung ein Drosselkanal vorgesehen, welcher den Dämpfungsraum mit dem Strömungskanal verbindet. Dadurch ist gewährleistet, daß ein sich in dem Strömungskanal befindliches Medium, beispielsweise Wasserdampf, gedrosselt in den Dämpfungsraum einströmt. In dem Dämpfungsraum erfolgt somit beim Öffnen der Druckarmatur nur ein allmählicher Druckanstieg. Dadurch wird eine Bewegung des Kolbens, insbesondere eine Aufwärtsbewegung entlang der Hauptachse der Druckarmatur, verlangsamt. Die Gefahr einer übermäßigen mechanischen Beanspruchung der Druckarmatur wird dadurch weiter verringert.

Für ein Schließen der Druckarmatur aus einer den Strömungskanal öffnenden Position heraus, insbesondere für ein Wiederschließen, weist sie vorzugsweise einen Steuerraum auf, welcher an der dem Ventilkegel gegenüberliegenden Seite des Kolbens liegt und über einen Drosselkanal mit dem Strömungskanal in Verbindung steht. Der Steuerraum ist über einen Entlastungskanal druckentlastbar, welcher beispielsweise über ein fremdmediumbetreibbares Steuerventil geöffnet und geschlossen werden kann. Ist der Entlastungskanal geschlossen, so wird der Steuerraum über den Drosselkanal mit Medium aus dem Strömungskanal befüllt. Dadurch erfolgt ein Druckaufbau innerhalb des Steuerraums, und der Kolben wird hydraulisch entlang der Hauptachse bewegt, insbesondere abwärts bewegt, wenn die Greifvorrichtung, beispielsweise über das fremdmediumbetreibbare Steuerventil, aus ihrer Fangposition herausgehalten wird. Der Ventilkegel wird somit in eine den Strömungskanal schließende Position gebracht. Ist der Strömungskanal bereits geschlossen, so hält das in dem Steuerraum befindliche Medium ihn zu.

Besonders vorteilhaft ist eine Verwendung der Druckarmatur als Druckentlastungsventil für einen Druckbehälter eines Kernreaktors, insbesondere eines Druckwasserreaktors, da mit der Druckarmatur eine Druckentlastung des Druckbehälters auf einen niedrigen Druck, insbesondere etwa 2 bis 4 bar oder niedriger, gewährleistet ist.

Die Druckarmatur eignet sich ebenfalls zur Verwendung als kombiniertes Druckentlastungs- und Druckabsicherungsventil für einen Druckbehälter eines Kernreaktors, insbesondere eines Druckwasserreaktors. Unter einer Druckentlastung wird hierbei die Absenkung des Druckes im Inneren eines Druckgefäßes unterhalb des normalen Betriebdruckes verstanden und unter einer Druckabsicherung eine Sicherung eines unter Innendruck stehenden Druckgefäßes gegen Überdruck versagen. Ein kombiniertes Druckentlastungs- und Druckabsicherungsventil hat somit beide Eigenschaften, nämlich bei Überschreiten eines kritischen Druckes zu öffnen und somit einen weiteren gefährlichen Druckanstieg zu vermindern sowie in einem entsprechenden Anforderungsfall durch Öffnen den Innendruck innerhalb des Gefäßes auf ein gewünschtes Maß, insbesondere auf den Umgebungsdruck, zu reduzieren. Über das fremdmediumbetreibbare Steuerventil ist eine Druckentlastung unabhängig von dem im Inneren der Druckarmatur herrschenden Druck möglich. Durch die Greifvorrichtung ist eine Druckentlastung bis auf einen sehr niedrigen Druck und sogar auf einen drucklosen Zustand ermöglicht. Dies ist z.B. bei Prüfungen des Druckbehälters von Vorteil. Über das fremdmediumbetreibbare Steuerventil ist darüber hinaus ein erneutes Schließen der Druckarmatur durchführbar. Hierzu wird, falls erforderlich, die Greifeinrichtung aus ihrer Fangposition wieder herausbewegt. Mittels des eigenmediumbetreibbaren Steuerventils, insbesondere eines Federventils, erfüllt die Druckarmatur darüber hinaus die Funktion eines Druckabsicherungsventils. Die Druckarmatur stellt somit ein besonders kompaktes kombiniertes Druckentlastungs- und Druckabsicherungsventil dar, welches bis in einen drucklosen Zustand hinein offen gehalten werden kann.

Die Druckarmatur wird vorzugsweise als kombiniertes Druckentlastungs- und Druckabsicherungsventil für einen Druckhalter eines Druckwasserreaktors verwendet.

Anhand der Zeichnung wird die Druckarmatur näher erläutert. Es zeigen jeweils in einem Längsschnitt:
- FIG 1: Eine Druckarmatur, welche an einen Druckhalter angeschlossen ist,
- FIG 2: eine vergrößerte Darstellung der Druckarmatur im geschlossenen Zustand,
- FIG 3: eine vergrößerte Darstellung der Druckarmatur im geöffneten Zustand,
- FIG 4: eine vergrößerte Darstellung der Druckarmatur im geöffneten Zustand.

In den Figuren sind jeweils nur die zur Erläuterung wesentlichen Komponenten der Druckarmatur dargestellt.

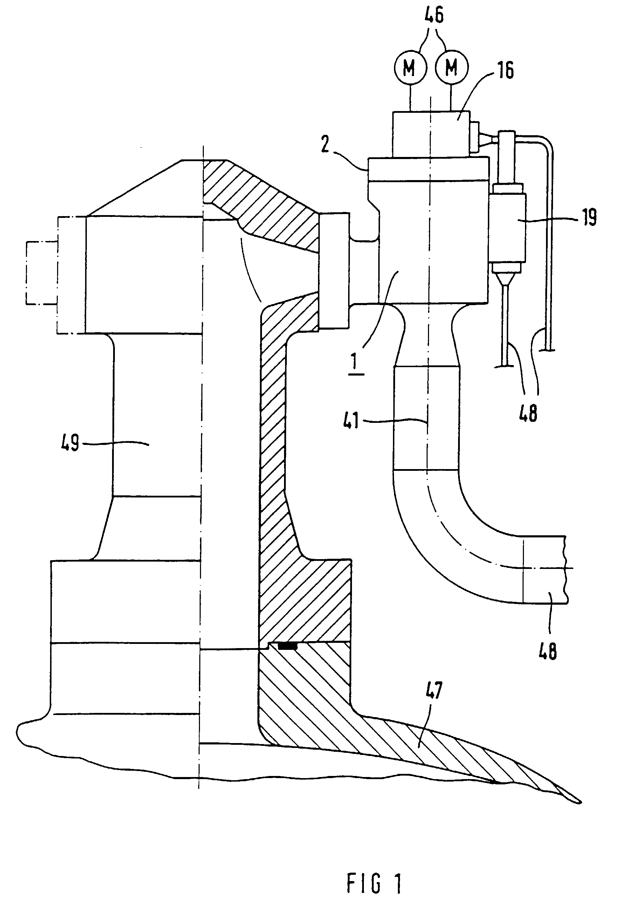

In FIG 1 ist eine Druckarmatur 1 dargestellt, welche an einem Domaufsatz 49 eines Druckhalters 47, beispielsweise eines Druckwasserreaktors, dargestellt. Entlang einer Hauptachse 41 der Druckarmatur 1 schließt sich unterhalb der Druckarmatur 1 eine Druckentlastungsleitung 48 an. Auf einem Deckel 2 der Druckarmatur 1 ist ein fremdmediumbetreibbares Steuerventil 16 mit zwei Motoren 46 angeordnet. Aus dem Steuerventil 16 heraus führt eine weitere Druckentlastungsleitung 48. An einer dem Domaufsatz 49 gegenüberliegenden Seite der Druckarmatur 1 ist ein eigenmediumbetreibbares Steuerventil 19, eine Federventil, angeordnet, welches ebenfalls eine Druckentlastungsleitung 48 aufweist.

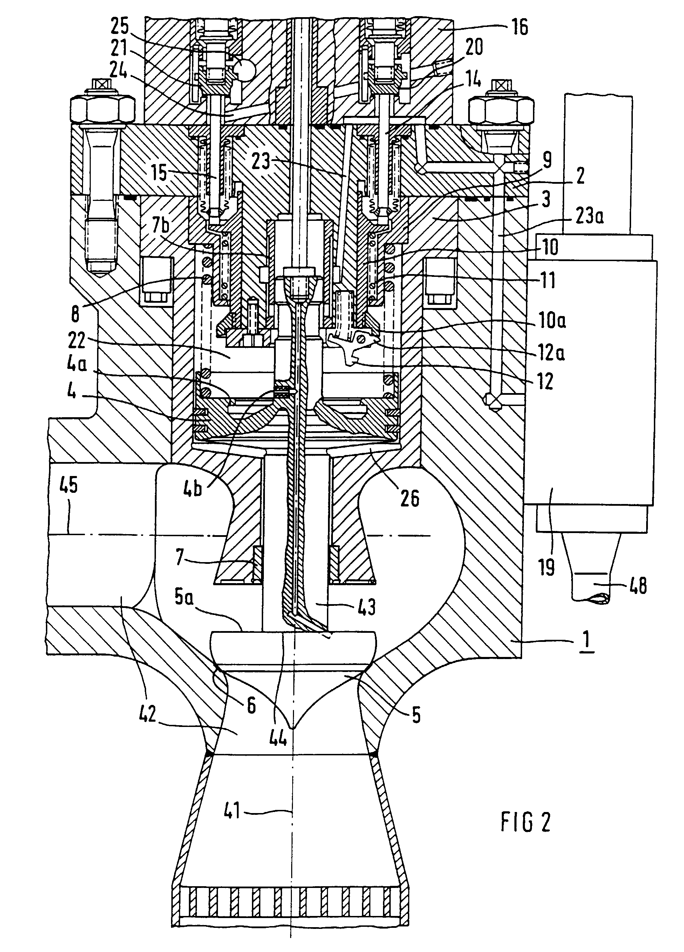

FIG 2 zeigt einen Schnitt durch die Druckarmatur 1 im geschlossenen Zustand. Die Druckarmatur 1 hat einen Strömungskanal 42, welcher entlang einer Achse 45 in die Druckarmatur 1 hineinführt und entlang der Hauptachse 41 aus dieser herausführt. Ein Ventilkegel 5 der Druckarmatur 1 ist an einem Ende 44 eines Verschiebungselementes 43, einer Kolbenstange, angeordnet. Das Verschiebungselement 43 und dadurch auch der Ventilkegel 5 sind entlang der Hauptachse 41 verschieblich. Der Ventilkegel 5 sitzt auf einem Ventilsitz 6 und schließt den Strömungskanal 42 in Richtung der Hauptachse 41 ab. Die Hauptachse 41 und die Achse 45 des einlaufenden Strömungskanals 42 stehen senkrecht zueinander. In dem Teil des Strömungskanals 42, welcher parallel zur Achse 45 verläuft, d.h. dem waagrechten Teil, liegt ein unter Druck stehendes Medium, beispielsweise Sattdampf, an. In dem Bereich des Strömungskanals 42, der parallel zur Hauptachse 41, d.h. vertikal verläuft, herrscht ein geringerer Druck. Der Ventilkegel 5 ist mit seiner Oberseite 5a einer Führung 7 des Verschiebungselementes 43 zugewandt.

Das Verschiebungselement 43 weist oberhalb des Strömungskanals 42 einen Kolben 4 auf, der in einem Führungszylinder 3 geführt und gegen diesen mit nicht näher bezeichneten Kolbenringen abgedichtet ist.

Der Kolben 4 teilt somit das Innere der Druckarmatur 1 in einen unterhalb des Kolbens 4 liegenden Dämpfungsraum 26, der zylinderförmig ist und dem Ventilkegel 5 zugewandt ist, und in einen Steuerraum 22, der oberhalb des Kolbens 4 liegt. Innerhalb des Steuerraums 22 ist eine Greifvorrichtung 12, eine Fangklinke, um einen Drehpunkt drehbeweglich angeordnet. Der Kolben 4 wird durch eine Ventilfeder 8 nach unten, d.h. in Richtung des Ventilkegels 5 gedrückt. Die Fangklinke ist über eine Schalthülse 10 aus der Fangposition herausgehalten. Eine Feder 11 der Schalthülse 10 ist in einem Federträger 9 gehalten und übt auf die Schalthülse 10 eine nach oben gerichtete Kraft aus. Entgegen dieser Kraft ist die Schalthülse 10 über Stößel 14,15 in ihrer Position gehalten. Die Stößel 14,15 ihrerseits werden über einen jeweiligen Steuerventilkegel 20,21 des motorbetriebenen Steuerventils 16 gehalten. Von dem Steuerraum 22 führt ein Druckentlastungskanal 23,23a einerseits zu dem motorbetriebenen Steuerventil 16 sowie andererseits zu dem eigenmediumbetreibbaren Steuerventil 19, dem Federventil. Weitere Druckentlastungskanäle 24,25 verbinden den Steuerraum 22 mit dem motorbetreibbaren Steuerventil 16.

Der Kolben 4 hat auf einer der Fangklinke 12 zugewandten Seite einen als Nut 4a ausgebildeten umlaufenden Bund, in den die Fangklinke 12 in ihrer Fangposition eingreifen kann. Die Druckarmatur 1 befindet sich in ihrem Normalbetriebszustand, d.h. sowohl das Federventil 19 als auch die beiden Steuerventilkegel 20,21 des motorbetreibbaren Steuerventils 16 sind geschlossen. Auch der Ventilkegel 5 befindet sich auf seinem Ventilsitz 6 und schließt den Strömungskanal 42 ab. Die Steuerventilkegel 20,21 drücken über die Stößel 14,15 die Schalthülse 10 gegen die Kraft der Feder 11 nach unten. Dadurch ist das untere Ende 10a der Schalthülse 10 auf einen Nocken 12a der Fangklinke 12 gedrückt und diese ist aus dem Bereich der Nut 4a des Kolbens 4 herausbewegt. In dieser Lage der Fangklinke 12 ist die Druckarmatur 1 für eine Druckentlastung und eine Druckabsicherung uneingeschränkt als Druckabsicherungsventil verwendbar.

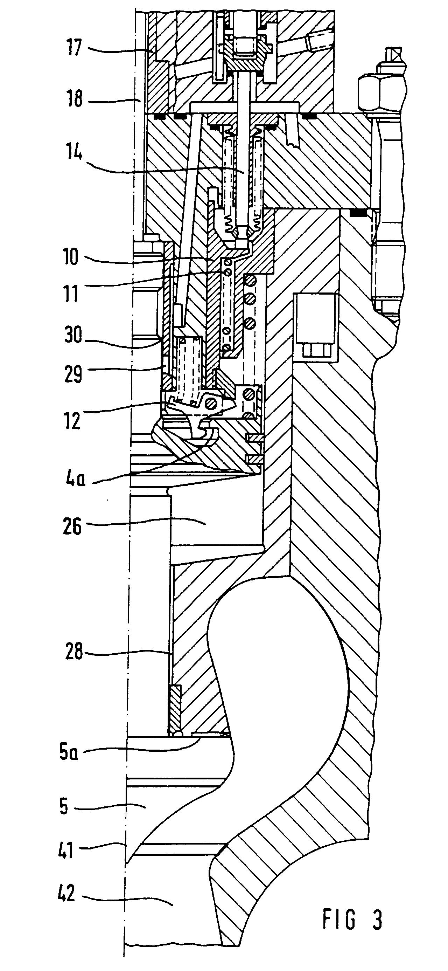

In FIG 3 ist die Druckarmatur 1 in geöffnetem Zustand in ihrer Funktion als Druckabsicherungsventil dargestellt. Bei einem kritischen Systemdruck, beispielsweise von 176 bar, hat das Federventil 19 den Steuerraum 22 der Druckarmatur 1 über den Entlastungskanal 23,23a soweit druckentlastet, daß der Ventilkegel 5 in eine den Strömungskanal 42 öffnende Position gelangt ist. Der Ventilkegel 5 liegt mit seiner Oberseite 5a an der Führung 7 an. Entsprechend der Bewegung des Ventilkegels 5 ist ebenfalls der Kolben 4 nach oben bewegt worden. Er befindet sich unmittelbar in der Nähe der Fangklinke 12, ohne daß diese in die vorgesehene Nut 4a des Kolbens 4 eingreift. Die Schalthülse 10 mit ihrer Feder 11 wird durch den Stößel 14 so gehalten, daß sie die Fangklinke 12 aus der Fangposition heraushält. Der Dämpfungsraum 26 zwischen dem Kolben 4 und der Führung 7 hat in dieser Position seine maximale Größe. Er ist zu dem Steuerraum 22 durch den Kolben 4 abgedichtet und über einen Drosselspalt 28, welcher parallel zu der Hauptachse 41 zwischen dem Verschiebungselement 43 und der Führung 7 verläuft, mit dem Strömungskanal 42 verbunden. Der Dämpfungsraum 26 führt sowohl bei einer Öffnungsbewegung des Kolbens 4 sowie einer Schließbewegung des Kolbens 4 zu einer entsprechenden Verlangsamung der Bewegung des Kolbens 4. Bei einer Absenkung des Druckes im Steuerraum 22 wird der Kolben 4 entgegen der Schließkraft, die insbesondere über die Ventilfeder 8 und den Druck im Steuerraum 22 erzeugt wird, infolge einer Druckbeaufschlagung des Dämpfungsraums 26 nach oben bewegt. Um eine zu schnelle Öffnungsbewegung und damit eine starke dynamische Belastung zu vermeiden, ist eine Drosselung der Druckentlastung des Steuerraums 22 vorgesehen. Dies wird zum Teil durch den Dämpfungsraum 26 erreicht, der sich bei einer Aufwärtsbewegung des Kolbens 4 stetig vergrößert, in dem aber ein Druckaufbau durch den Drosselspalt 28 nur verzögert zustandekommt. Eine Drosselung der Druckentlastung des Steuerraums 22 wird weiterhin dadurch erreicht, daß das Verschiebungselement 43 oberhalb des Kolbens 4 eine Steuerkante 30 aufweist. Diese Steuerkante 30 verschließt ab einem vorgegebenen Hub des Kolbens 4 eine Druckentlastungsöffnung 29 in einer das Verschiebungselement 43 umgebenen oberen Führung 7b, wodurch die Druckentlastung verringert wird. Hat der Kolben 4 eine obere Endlage angenommen, d.h. der Ventilkegel 5 liegt mit seiner Oberseite 5a an der Führung 7 an, so findet zwischen dem Dämpfungsraum 26 und dem Strömungskanal 42 ein Druckausgleich statt.

Bei einem Schließvorgang der Druckarmatur 1 wirkt an der ringförmigen Oberseite 5a des Ventilkegels 5 eine zusätzliche Strömungskraft. Eine Beschleunigung des Ventilkegels 5 durch diese Strömungskraft kann ebenfalls durch den Dämpfungsraum 26 verhindert werden, da das in dem Dämpfungsraum 26 befindliche Medium durch den ebenfalls ringförmigen Drosselspalt 28 in dem Strömungskanal 42 abströmen muß. Bei einer schnellen Abwärtsbewegung des Kolbens 4 kann das Medium somit nicht ungehindert aus dem Dämpfungsraum 26 abströmen, so daß in dem Dämpfungsraum 26 eine Kompression des Mediums und damit eine Druckerhöhung stattfindet. Diese Druckerhöhung wirkt der Abwärtsbewegung des Kolbens 4 entgegen und verlangsamt den Schließvorgang der Druckarmatur 1. Dadurch wird ein hartes Auftreffen des Ventilkegels 5 auf seinen Ventilsitz 6 weitgehend vermieden.

Der Schließvorgang der Druckarmatur 1 beginnt, sobald das Federventil 19 infolge eines absinkenden Druckes, beispielsweise unterhalb ca. 150 bar, wieder schließt. Eine weitere Entlastung der Druckarmatur 1, insbesondere des Steuerraums 22 ist dann beendet. Über den Drosselkanal 4b strömt Medium aus dem Strömungskanal 42 in den Steuerraum 22 nach und führt zu einer entsprechenden Druckbeaufschlagung des Kolbens 4. Dadurch erfolgt ein erneutes Schließen der Druckarmatur 1, ohne eine Behinderung durch die Greifvorrichtung 12. Die Druckarmatur 1 wirkt somit als Druckabsicherungsventil.

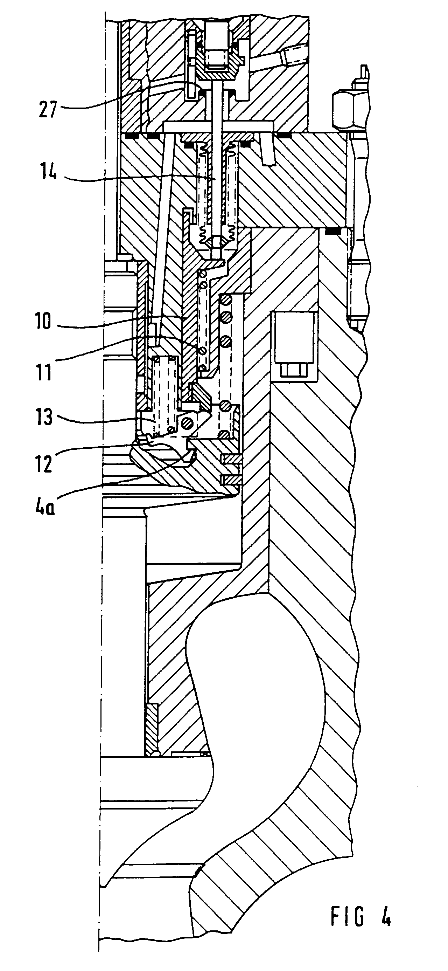

In FIG 4 ist die Druckarmatur 1 in geöffnetem Zustand in der Funktionsweise als ein Druckentlastungsventil dargestellt. Zur Veranschaulichung des Eingreifens der Fangklinke 12 in die Nut 4a des Kolbens 4 ist nur ein Ausschnitt der Druckarmatur zwischen der Hauptachse 41 und dem Federventil 19 gezeigt. Über die jeweiligen Motoren 46 (siehe FIG 1) sind die Steuerventilkegel 20,21 aus ihrem jeweilen Sitz 27 herausgefahren, so daß über die Entlastungskanäle 23,24 und 25 eine Druckentlastung des Steuerraums 22 stattgefunden hat. Der Kolben 4 sowie der Ventilkegel 5 sind somit hydraulisch nach oben, d.h. weg von dem Ventilsitz 6, bewegt worden. Weiterhin sind die Schalthülse 10 und die Stößel 14,15 durch die Feder 11 ebenfalls nach oben bewegt worden, so daß die Fangklinke 12 von einer Druckfeder 13 in die Fangposition gedreht wurde. Sie greift in die Nut 4a, den umlaufenden Bund des Kolbens 4 ein und hält letzteren, falls er Absinken sollte, in einer den Strömungskanal öffnenden Position.

Bei geöffnetem motorbetreibbaren Steuerventil 16 und ausreichend hohem Druck in dem Dämpfungsraum 26 bleibt der Ventilkegel 5 und der Kolben 4 in der dargestellten, den Strömungskanal öffnenden Position. Fällt der Druck unter einen Mindestwert so beginnt sich der Kolben 4 infolge des Eigengewichtes des Verschiebungselementes 43 sowie aufgrund der von der Ventilfeder 8 ausgeübten Kraft nach unten zu bewegen. Diese Bewegung sowie die entsprechenden Kräfte werden von der Fangklinke 12 aufgefangen und der Kolben 4 sowie der Ventilkegel 5 sicher in der den Strömungskanal öffnenden Position gehalten. Hierzu können auch mehrere Fangklinken vorgesehen sein.

Eine Funktionsprüfung der Druckarmatur 1 während eines Betriebes des unter Druck stehenden Systems, insbesondere eines Kernreaktor-Druckbehälters, kann, beispielsweise bei einem abgesenkten Druck von ca. 40 bar bei An- oder Abfahren des Systems, einfach durchgeführt werden. Ein Öffnen des motorbetreibbaren Steuerventils 16 führt zu einem hydraulischen Öffnen der Druckarmatur 1 und einer Bewegung der Fangklinke oder der Fangklinken 12 in die Fangstellung. Eine Stellungsanzeige des Kolbens 4 erfolgt dabei über eine Stellungsanzeigestange 18, die in einem Fingerhutrohr 17 geführt ist und mit dem Verschiebungselement 43 entlang der Hauptachse 41 verbunden ist. Erreicht bei einem darauffolgenden Wiederschließvorgang einer der beiden Steuerventilkegel 20,21 seinen Ventilsitz 27 nicht oder bleibt er ganz offen, so erfolgt trotzdem ein Schließen der Druckarmatur 1. Denn, ein einzelner schließender Steuerventilkegel 20,21 bewegt die Fangklinke 12 aus der Nut 4a heraus und führt zu einem Verschluß der Entlastungskanäle 23,24,25, so daß ein hydraulisches Schließen der Druckarmatur 1 erfolgt. Eine Auswechslung eines fehlerhaften Motors 46 des motorbetreibbaren Steuerventils 16 ist somit selbst während des Betriebs des Systems, insbesondere eines Kernreaktors möglich, ohne dieses Abschalten zu müssen. Durch ein abwechselndes Herausfahren der Steuerventilkegel 20,21 aus ihrem jeweiligen Ventilsitz 27 kann selbst während eines Vollastbetriebs des Systems die Funktionstüchtigkeit des motorbetreibbaren Steuerventils 16 überprüft werden, ohne ein Öffnen des Strömungskanals 42 zu bewirken. Die Fangklinken 12 bleiben bei einer solchen Prüfung stets aus der Fangposition herausgefahren, so daß während der Prüfung die Druckarmatur 1 ständig als Druckabsicherungsventil einsatzfähig bleibt.

Die Erfindung zeichnet sich dadurch aus, daß mit einer einzigen äußerst kompakten Druckarmatur ein kombiniertes Druckentlastungs- und Druckabsicherungsventil gegeben ist, welches eine Druckentlastung bis zu einem drucklosen Zustand gewährleistet. Eine Schließbewegung des Ventilkegels wird über eine Greifvorrichtung, insbesondere eine Fangklinke, sicher verhindert, wobei die Greifvorrichtung an einem Verschiebungselement eingreift und den Ventilkegel somit fest in einer den Strömungskanal öffnenden Position hält. Durch ein fremdmediumbetreibbares Steuerventil mit zumindest zwei voneinander unabhängigen Motoren kann eine Überprüfung dieses Steuerventils selbst während des Betriebes eines unter Druck stehenden Systems erfolgen. Die Druckarmatur eignet sich besonders als kombiniertes Druckentlastungs- und Druckabsicherungsventil für einen Druckhalter eines Druckwasserreaktors.

## Patentansprüche

1. Druckarmatur (1) mit einem Strömungskanal (42), einem Ventilkegel (5), einem Verschiebungselement (43) und einer Greifvorrichtung (12), wobei
a) das Verschiebungselement (43) entlang einer Hauptachse (41) der Druckarmatur (1) verschieblich angeordnet ist,
b) an einem Ende (44) des Verschiebungselements (43) der Ventilkegel (5) angeordnet ist,
c) der Strömungskanal (42) durch den Ventilkegel (5) verschließbar ist,
d) die Greifvorrichtung (12) in eine Fangstellung bewegbar ist, so daß sie bei einer den Strömungskanal (42) öffnenden Position des Ventilkegels (5) den Ventilkegel (5) und/oder das Verschiebungselement (43) greift und den Ventilkegel (5) in der den Strömungskanal (42) öffnenden Position hält, **dadurch gekennzeichnet**, daß das Verschiebungselement (43) einen Kolben (4) hat, der in einer Führung (7) führbar ist und Mittel (4a) für ein Eingreifen der Greifvorrichtung (12) aufweist, daß die Greifvorrichtung (12) zumindest eine um einen Drehpunkt schwenkbare Fangklinke hat, und daß zwischen dem Kolben (4) und der Führung (7) ein Dämpfungsraum (26) angeordnet ist.

2. Druckarmatur (1) mit einem Strömungskanal (42), einem Ventilkegel (5), einem Verschiebungselement (43) und einer Greifvorrichtung (12), wobei
a) das Verschiebungselement (43) entlang einer Hauptachse (41) der Druckarmatur (1) verschieblich angeordnet ist,
b) an einem Ende (44) des Verschiebungselements (43) der Ventilkegel (5) angeordnet ist,
c) der Strömungskanal (42) durch den Ventilkegel (5) verschließbar ist,
d) die Greifvorrichtung (12) in eine Fangstellung bewegbar ist, so daß sie bei einer den Strömungskanal (42) öffnenden Position des Ventilkegels (5) den Ventilkegel (5) und/oder das Verschiebungselement (43) greift und den Ventilkegel (5) in der den Strömungskanal (42) öffnenden Position hält, **dadurch gekennzeichnet**, daß eine Steuervorrichtung vorgesehen ist, mit welcher die Greifvorrichtung (12) in die Fangstellung hinein und aus dieser heraus in eine Freistellung, in der der Ventilkegel (5) wieder frei verschieblich ist, steuerbar ist.

3. Druckarmatur (1) nach Anspruch 2, bei der die Steuervorrichtung ein Steuerventil (16) ist, das zumindest über einen Motor (46) betreibbar ist.

4. Druckarmatur (1) nach Anspruch 3, bei der der Motor (46) einen Stößel (14,15) antreibt, welcher, insbesondere über eine Schalthülse (10), die Greifvorrichtung (12) in die Fangposition hinein und aus dieser heraus bewegt.

5. Druckarmatur (1) nach einem der Ansprüche 3 oder 4, bei der das Steuerventil (16) über zwei voneinander unabhängige Motoren (46) betreibbar ist.

6. Druckarmatur (1) nach einem der Ansprüche 2 bis 5, **dadurch gekennzeichnet,** daß als Steuervorrichtung ein mit Fremdmedium betreibbares Steuerventil (16) vorgesehen ist.

7. Druckarmatur (1) nach einem der Ansprüche 2 bis 6, bei der über die Steuervorrichtung ein Öffnen und ein Schließen des Strömumgskanals (42), insbesondere für eine Druckentlastung, durchführbar ist.

8. Druckarmatur (1) nach einem der vorhergehenden Ansprüche, die nach dem Entlastungsprinzip arbeitet, wobei bei geschlossenem Strömungskanal (42) stromaufwärts des Ventilkegels (5) ein Druck aufbringbar ist, der im Inneren (22,26) der Druckarmatur (1) reduzierbar ist, wodurch eine den Strömungskanal öffnende Bewegung des Ventilkegels (5) erzeugt wird.

9. Druckarmatur (1) nach Anspruch 8, wobei ein eigenmediumbetreibbares Steuerventil (19) vorgesehen ist, welches bei Überschreiten eines kritischen Druckes im Inneren (22,26) der Druckarmatur (1) ein Öffnen des Strömungskanal (42) und bei Unterschreiten des kritischen Druckes ein Wiederschließen des Strömungskanals (42) bewirkt.

10. Druckarmatur (1) nach einem der vorhergehenden Ansprüche, bei dem der Ventilkegel (5) in der stromabwärtigen Richtung annähernd eine Zwiebelform hat.

11. Druckarmatur (1) nach Anspruch 1, bei der der Kolben (4) eine Nut (4a) zum Eingreifen der Fangklinke hat.

12. Druckarmatur (1) nach einem der Ansprüche 1 oder 11, bei der zwischen einem unteren Bereich (7a) der Führung (7) und dem Kolben (4) ein Dämpfungsraum (26) vorgesehen ist.

13. Druckarmatur (1) nach Anspruch 12, bei der in der Führung (7) ein Drosselkanal (28) vorgesehen ist, welcher den Dämpfungsraum (22) mit dem Strömungskanal (42) verbindet.

14. Druckarmatur (1) nach einem der Ansprüche 1 oder 11 bis 13, bei der ein Steuerraum (22), welcher an der dem ventilkegel (5) gegenüberliegenden Seite des Kolbens (4) liegt, über einen Drosselkanal (4b) mit dem Strömungskanal (42) in Verbindung steht.

15. Druckarmatur (1) nach einem der vorhergehenden Ansprüche als Druckentlastungsventil für einen Druckbehälter eies Kernreaktors, insbesondere eines Druckwasserreaktors.

16. Druckarmatur (1) nach einem der Ansprüche 1 bis 14 als kombiniertes Druckentlastungs- und Druckabsicherungsventil für einen Druckbehälter eines Kernreaktors, insbesondere eines Druckwasserreaktors.

17. Druckarmatur (1) nach einem der Ansprüche 1 bis 14 als kombiniertes Druckentlastungs- und Druckabsicherungsventil für einen Druckhalter (47) eines Druckwasserreaktors.

## Claims

1. Pressure fitting (1) having a flow channel (42), a valve cone (5), a sliding element (43) and a gripping device (12), wherein
a) the sliding element (43) is arranged so that it can be displaced along a main axis (41) of the pressure fitting (1),
b) the valve cone (5) is arranged at one end (44) of the sliding element (43),
c) the flow channel (42) can be closed by means of the valve cone (5),
d) the gripping device (12) can be moved into a catching position so that in a position of the valve cone (5) in which the flow channel (42) is opened it grips the valve cone (5) and/or the sliding element (43) and holds the valve cone (5) in the position in which the flow channel (42) is opened,
characterised in that the sliding element (43) has a plunger (4) which can be guided in a guide (7) and has means (4a) for engagement of the gripping device (12), in that the gripping device (12) has at least one catch pawl, which can be pivoted about a pivot point, and in that a damping chamber (26) is arranged between the plunger (4) and the guide (7).

2. Pressure fitting (1) having a flow channel (42), a valve cone (5), a sliding element (43) and a gripping device (12), wherein
a) the sliding element (43) is arranged so that it can be displaced along a main axis (41) of the pressure fitting (1),
b) the valve cone (5) is arranged at one end (44) of the sliding element (43),
c) the flow channel (42) can be closed by means of the valve cone (5),
d) the gripping device (12) can be moved into a catching position so that in a position of the valve cone (5) in which the flow channel (42) is opened it grips the valve cone (5) and/or the sliding element (43) and holds the valve cone (5) in the position in which the flow channel (42) is opened,
characterised in that a control device is provided with which the gripping device (12) can be moved in a controlled manner into the catching position and out of this position into a free position in which the valve cone (5) is again freely displaceable.

3. Pressure fitting (1) according to claim 2, wherein the control device is a control valve (16) which can be operated by way of at least one motor (46).

4. Pressure fitting (1) according to claim 3, wherein the motor (46) drives a tappet (14, 15) which, in particular by way of a switching sleeve (10), moves the gripping device (12) into the catching position and out of this position.

5. Pressure fitting (1) according to one of the claims 3 or 4, wherein the control valve (16) can be operated by way of two motors (46) which are independent of each other.

6. Pressure fitting (1) according to one of the claims 2 to 5, characterised in that an externally operable control valve (16) is provided as the control device.

7. Pressure fitting according to one of the claims 2 to 6, wherein opening and closure of the flow channel (42), in particular for pressure relief, can be carried out by way of the control device.

8. Pressure fitting (1) according to one of the preceding claims that operates according to the relief principle, wherein with the flow channel (42) closed it is possible to apply a pressure upstream of the valve cone (5), which pressure is reducible in the interior (22, 26) of the pressure fitting (1), whereby a movement of the valve cone (5) opening the flow channel is generated.

9. Pressure fitting (1) according to claim 8, wherein an internally operable control valve (19) is provided which when a critical pressure is exceeded in the interior (22, 26) of the pressure fitting (1) causes the flow channel (42) to open and when there is a fall below the critical pressure causes the flow channel (42) to close again.

10. Pressure fitting (1) according to one of the preceding claims, wherein the valve cone (5) is substantially onion-shaped in the downstream direction.

11. Pressure fitting (1) according to claim 1, wherein the plunger (4) has a groove (4a) for engagement of the catch pawl.

12. Pressure fitting (1) according to one of the claims 1 or 11, wherein a damping chamber (26) is provided between a lower region (7a) of the guide (7) and the plunger (4).

13. Pressure fitting (1) according to claim 12, wherein provided in the guide (7) there is a throttle channel (28) which connects the damping chamber (22 - sic) with the flow channel (42).

14. Pressure fitting (1) according to one of the claims 1 or 11 to 13, wherein a control chamber (22), which lies on the side of the plunger (4) opposite the valve cone (5), communicates with the flow channel (42) by way of a throttle channel (4b).

15. Pressure fitting (1) according to one of the preceding claims as a pressure relief valve for a pressure vessel of a nuclear reactor, in particular a pressurized water reactor.

16. Pressure fitting (1) according to one of the claims 1 to 14 as a combined pressure relief and safety valve for a pressure vessel of a nuclear reactor, in particular a pressurized water reactor.

17. Pressure fitting (1) according to one of the claims 1 to 14 as a combined pressure relief and safety valve for a pressurizer (47) of a pressurized water reactor.

## Revendications

1. Appareil de robinetterie sous pression (1) comportant un canal d'écoulement (42), un cône de soupape (5), un élément de déplacement (43) et un dispositif de préhension (12), dans lequel
a) l'élément de déplacement (43) est disposé de façon mobile le long d'un axe principal (41) de la robinetterie sous pression (1),
b) le cône de soupape (5) est disposé à une extrémité (44) de l'élément de déplacement (43),
c) le canal d'écoulement (42) peut être obturé par le cône de soupape (5)
d) le dispositif de préhension (12) peut se déplacer dans une position d'arrêt de sorte qu'il saisit dans une position du cône de soupape (5), ouvrant le canal d'écoulement (42), le cône de soupape (5) et / ou saisit l'élément de déplacement (43) et maintient le cône de soupape (5) dans la position ouvrant le canal d'écoulement (42), caractérisé en ce que l'élément de déplacement (43) a un piston (4) pouvant être guidé dans une glissière de guidage (7) et présente des moyens (4a) pour une saisie du dispositif de préhension (12), en ce que le dispositif de préhension (12) a au moins un cliquet d'arrêt pivotant autour d'un point d'appui, et en ce qu'entre le piston (4) et la glissière de guidage (7) est ménagé un espace d'amortissement (26).

2. Appareil de robinetterie sous pression (1) comportant un canal d'écoulement (42), un cône de soupape (5), un élément de déplacement (43) et un dispositif de préhension (12), dans lequel
a) l'élément de déplacement (43) est disposé de façon mobile le long d'un axe principal (41) de l'appareil de robinetterie sous pression (1),
b) le cône de soupape (5) est disposé à une extrémité (44) de l'élément de déplacement (43),
c) le canal d'écoulement (42) peut être obturé par le cône de soupape (5),
d) le dispositif de préhension (12) peut être déplacé dans une position d'arrêt, de sorte qu'il saisit, dans une position du cône de soupape (5), ouvrant le canal d'écoulement (42), le cône de soupape (5) et / ou l'élément de déplacement (43) et maintient le cône de soupape (5) dans la position ouvrant le canal d'écoulement (42), caractérisé en ce qu'est prévu un dispositif de commande par lequel le dispositif de préhension (12) peut être commandé dans la position d'arrêt et hors de celle-ci dans une position libre, dans laquelle le cône de soupape (5) est de nouveau mobile librement.

3. Appareil de robinetterie sous pression (1) selon la revendication 2, dans lequel le dispositif de commande est une vanne-pilote (16) pouvant être actionnée par au moins un moteur (46).

4. Appareil de robinetterie sous pression (1) selon la revendication 3, dans lequel le moteur (46) commande une tige-poussoir (14, 15), qui déplace le dispositif de préhension (12) dans la position d'arrêt et hors de celle-ci, notamment au moyen d'une douille de commutation (10).

5. Appareil de robinetterie sous pression (1) selon l'une des revendications 3 ou 4, dans lequel la vanne-pilote (16) peut être actionnée au moyen de deux moteurs (46) indépendants l'un de l'autre.

6. Appareil de robinetterie sous pression (1) selon l'une des revendications 2 à 5, caractérisé en ce qu'une vanne-pilote (16) pouvant être actionnée par un milieu extérieur est prévue comme dispositif de commande.

7. Appareil de robinetterie sous pression (1) selon l'une des revendications 2 à 6, dans lequel l'ouverture et la fermeture du canal d'écoulement (42), notamment pour une détente de pression, peut être exécutée au moyen du dispositif de commande.

8. Appareil de robinetterie sous pression (1) selon l'une des revendications précédentes, qui fonctionne selon le principe de détente, dans lequel, le canal d'écoulement (42) étant fermé, une pression pouvant être détendue à l'intérieur (22, 26) de l'appareil de robinetterie sous pression (1), peut être appliquée en amont du cône de soupape (5), un mouvement, ouvrant le canal d'écoulement, du cône de soupape (5) étant produit de cette façon.

9. Appareil de robinetterie sous pression (1) selon la revendication 8, dans lequel est prévue une soupape de commande (19) pouvant être actionnée par un milieu propre qui, lors du dépassement d'une pression critique à l'intérieur (22, 26) de l'appareil de robinetterie sous pression (1), procède à l'ouverture du canal d'écoulement (42) et, à un niveau inférieur à la pression critique, procède à la refermeture du canal d'écoulement (42).

10. Appareil de robinetterie sous pression (1) selon l'une des revendications précédentes, dans lequel le cône de soupape (5) a en aval presqu'une forme d'oignon.

11. Appareil de robinetterie sous pression (1) selon la revendication 1, dans lequel le piston (4) a une rainure (4a) pour engrener le cliquet d'arrêt.

12. Appareil de robinetterie sous pression (1) selon l'une des revendications 1 ou 11, dans lequel entre une zone inférieure (7a) de la glissière de guidage (7) et le piston (4) est prévu un espace d'amortissement (26).

13. Appareil de robinetterie sous pression (1) selon la revendication 12, dans lequel est prévu dans la glissière de guidage (7) un canal d'étranglement (28), qui relie l'espace d'amortissement (22) au canal d'écoulement (42).

14. Appareil de robinetterie sous pression (1) selon l'une des revendications 1 ou 11 à 13, dans lequel un espace de commande (22) qui est adjacent au côté du piston (4) opposé au cône de soupape (5), est en communication avec le canal d'écoulement (42) au moyen d'un canal d'étranglement (4b).

15. Appareil de robinetterie sous pression (1) selon l'une des revendications précédentes, prévu comme soupape de détente pour un réservoir sous pression d'un réacteur nucléaire, notamment d'un réacteur à eau sous pression.

16. Appareil de robinetterie sous pression (1) selon l'une des revendications 1 à 14, prévu comme soupape combinée de détente et de sécurité pour un réservoir sous pression d'un réacteur nucléaire, notamment d'un réacteur à eau sous pression.

17. Appareil de robinetterie sous pression (1) selon l'une des revendications 1 à 14, prévu comme soupape combinée de détente et de sécurité pour un dispositif de maintien de la pression (47) d'un réacteur à eau sous pression.
